# EUROPEAN PATENT APPLICATION

(11) **EP 2 628 533 A1**
(43) Date of publication of application: **21.08.2013**
(21) Application number: 13000778.4
(22) Date of filing: 15.02.2013
(51) Int. Cl.: B01J 20/34, C01B 31/08

(54) **Method and installation for the regeneration of spent carbonaceous adsorbent**

(30) Priority: 17.02.2012 BE 201200094; 07.09.2012 BE 201200582
(71) Applicant: DESOTEC N.V., 8800 Roeselare-Rumbeke (BE)
(72) Inventor: Craeye, Johan, 8870 Izegem (BE)

(57) **Abstract**

The invention relates to a method and a device for the regeneration of spent carbonaceous adsorbent under pyrolysis conditions releasing pyrolysis gases and volatile substances and combustion of the pyrolysis gases in an incinerator, after the volatile substances are removed from the pyrolysis gases by condensation.

## Description

The invention relates to a method and an installation for the regeneration of spent, carbonaceous adsorbent by pyrolysis releasing pyrolysis gases and volatile substances, in a durable installation and under environment-friendly conditions. The method and the installation according to the invention are particularly suitable for the regeneration of spent carbonaceous adsorbent heavily contaminated with sulfur compounds.

More particularly, the present invention relates to a method for the regeneration of spent carbonaceous adsorbent comprising the steps of a) feeding spent carbonaceous adsorbent to a drying and pyrolysis furnace, b) drying the spent carbonaceous adsorbent, c) regenerating the carbonaceous adsorbent by pyrolysis releasing pyrolysis gases and volatile substances and d) burning off the pyrolysis gases in an incinerator, said method characterized in that volatile substances are removed from the pyrolysis gases by condensation prior to combustion of the pyrolysis gases in an incinerator. The installation according to the invention thus comprises a drying and pyrolysis furnace, an incinerator and a condenser between the drying and pyrolysis furnace and the incinerator.

Carbonaceous adsorbents and particularly activated carbon are characterized by their high adsorption capacity for substances from gases and liquids and by their catalytic properties to convert and decompose these substances. They are particularly suitable for adsorbing and removing contaminants from gases and liquids and for decolorizing, deodorizing and purification of wastewater and waste gases.

When the amount of gases or liquids to be treated is relatively small, the carbonaceous adsorbent is typically used to full load (i.e. up to a small remaining adsorption capacity), and the spent carbonaceous adsorbent is then generally discarded. In large-scale industrial applications and in industrial wastewater treatment, however, it is important from an economical point of view that the large quantities of spent carbonaceous adsorbents are regenerated and re-used. In some cases, substances adsorbed on the carbonaceous adsorbent are recovered for example by extraction prior to regeneration of the spent carbonaceous adsorbent.

After all, carbon is a natural product obtained by the destructive distillation at high temperatures of, for example, coking coal, lignite coke or organic material such as peat and coconut shells. The fine carbon powder thus obtained is granulated for better handling and to improve filtration capacity and other physical properties of the carbon. In large-scale industrial applications and in industrial water treatment plants, the carbonaceous adsorbent is an important cost factor. Methods for the manufacture of activated carbon are frequently described in literature and amongst others in the patent specification No. US 4,107,084.

There are many known methods for regeneration, i.e. for removing adsorbed substances and reactivating spent carbonaceous adsorbents. Solvent extractions of spent carbonaceous adsorbents, under supercritical conditions or not, are described but the most common methods consist of the removal of excess water, pyrolysis of the dried carbonaceous adsorbent into volatile substances and carbon residues and the chemical removal of carbon residues. Most of the methods for the regeneration of spent carbonaceous adsorbents are based on the well-known water/gas reaction in which carbon residues react at high temperatures with water to form carbon monoxide and hydrogen. A typical process for the regeneration of activated carbon is described in the patent specification No. US 4,008,994.

The spent carbonaceous adsorbent is usually heated in the presence of a carrier gas and/or steam to a temperature of from 100° to 900°C in order to remove adsorbed substances by pyrolysis. One of the known problems with this method, however, is the emission of hot combustible pyrolysis gases often containing smelly, environmentally harmful and even toxic substances. It speaks for itself, especially in the light of increasingly stringent environmental standards and regulations, that such gases cannot simply be discharged into the atmosphere.

Hot pyrolysis gases from typical installations for the regeneration of spent carbonaceous adsorbents contain significant amounts of carbon monoxide (CO) and combustible organic substances. These pyrolysis gases are usually processed in an incinerator where, in the presence of an excess of oxygen, the CO and the combustible organic substances are transformed into CO₂, water, and other oxidized elements such as NOₓ and SOₓ, and where halogenated hydrocarbons are decomposed into HCl and/or HF.

Oxidized elements such as SOₓ and NOₓ, and HCl are known to cause acid rain. These compounds dissolve in water vapor and interact with other gases and particles in the air to form sulfates, sulfites, nitrates, nitrites and other contaminants that are particularly harmful for humans and the environment. The sulfates and nitrates as well as numerous other impurities are very corrosive, not only for the incinerator where they are formed but often also for the drying and pyrolysis furnace. As a matter of fact, waste gases released by the incinerator are usually recycled as propellant and carrier gas for spent carbonaceous adsorbent in the drying and pyrolysis furnace. The recycling of waste gases from the incinerator in a method for the thermal regeneration of spent carbonaceous adsorbents is well-known and described in the state of the art, inter alia, in the patent specifications No. US 4,248,706 and No. US 4,957,721.

From patent specification No. US 4,248,706, a method for the regeneration of spent carbon is known wherein spent carbon is dried by means of oxidized pyrolysis gases from the regeneration step and the efficiency of the process is improved by combustion of the recycled pyrolysis gases between the regeneration and the drying step. Volatile substances, carbon monoxide and hydrogen formed from carbon residues in the presence of steam are burned with an excess of fuel and oxygen and the liberated heat is used for the spent coal to be dried and for maintaining pyrolysis conditions in the regeneration step. In contrast to previously known methods for thermal regeneration of spent carbon, this method would allow waste gases to be discharged in the atmosphere without post-treatment in a scrubber or an incinerator. These gases would indeed be free of harmful volatile contaminants and high concentrations of carbon monoxide.

From the patent specification No. US 4,957,721 a method and a device for the regeneration of activated carbon are known in which moist carbonaceous material is dried and blown to the regeneration or reactivation zone of the device by means of recirculation gases. In the regeneration zone, the adsorbed material is pyrolysed and carbon residues are converted to CO and H₂. The resulting pyrolysis gases are mixed with fuel and sent to an incinerator to remove oxygen and then recycled to fluidize the carbon-containing waste material in the drying and regeneration zone.

Instead of recycling the waste gases from the incinerator, the waste gases from the incinerator may also be washed in a conventional gas scrubber to remove oxidized elements such as the aforementioned SOₓ and NOₓ from the waste gases before the waste gases are discharged in the atmosphere.

The methods and the devices for the thermal regeneration of spent carbon-based adsorbents according to the state of the art are, however, not durable and efficient and not suitable particularly for the thermal regeneration of carbonaceous adsorbents that are heavily contaminated with sulfur compounds.

Such carbonaceous adsorbents that are heavily contaminated with sulfur compounds are derived for example from sulfur-containing sewage gases such as biogas, landfill gas and synthetic gas (so-called syn-gas) and from plants for treatment of combustion gases such as those emitted in large quantities by coal plants. The above-mentioned gases and combustion gases of fossil fuels such as certain types of natural gases, petroleum, coal or lignite contain inter alia high concentrations of elemental sulfur and other sulfur compounds.

The above-mentioned sulfur compounds are converted by combustion into SOₓ, and particularly into SO₂ that forms sulfur trioxide (SO₃) in the air and sulfuric acid (H₂SO₄) in the presence of water vapor. These compounds return from the atmosphere back to the earth in the form of acid rain. An efficient removal of sulfur-containing components from waste gases by means of carbonaceous adsorbents is good for the environment, however, it generates a secondary waste stream of carbonaceous adsorbents heavily contaminated with sulfur compounds and difficult to be regenerated by means of methods and the devices known in the state of the art.

The durability of the incinerator and potential downstream installations (and by recirculation of waste gases, the drying and pyrolysis furnace as well) is limited as a result of high concentrations of corrosive substances such as SOₓ that in the presence of water vapor form H₂SO₄.

Moreover, high concentrations of caloric sulfur or sulfur compounds in the pyrolysis gases cause temperature in a commonly dimensioned incinerator to rise in an uncontrolled manner to the extent that the drying and pyrolysis furnace needs to be shut down for safety reasons reducing the capacity of the drying and pyrolysis furnace to half or an even smaller fraction of its ordinary capacity.

A scrubber after the incinerator may perhaps partially solve the environmental issues of oxidized components such as SOₓ in the waste gases from the incinerator, but not the problem of the limited durability of the incinerator (and by recirculation of the waste gases, the drying and pyrolysis furnace as well) due to corrosive compounds nor the problem of numerous process interruptions and reduced capacity of the drying and pyrolysis furnace due to high concentration of high-caloric sulfur compounds in the pyrolysis gases. Moreover, a scrubber after the incinerator generates a secondary sulfate waste stream that cannot be valorized, or only moderately.

Has now been found that, when volatile substances in pyrolysis gases from the regeneration of spent carbon-containing adsorption agents are removed from the pyrolysis gases by condensation prior to combustion of the pyrolysis gases in an incinerator, or prior to recycling the pyrolysis gases to the drying and pyrolysis furnace, the formation of highly corrosive substances is avoided, the durability of the apparatus is increased significantly, the temperature in the incinerator may be controlled, process interruptions as a result of too high temperatures in the incinerator are avoided and the capacity the drying and pyrolysis furnace is increased substantially.

It has also been found that the formation of highly corrosive substances is almost completely avoided by condensation and removal of volatile substances from pyrolysis gases prior to combustion of the pyrolysis gases in an incinerator or recirculation of the pyrolysis gases to the drying and pyrolysis furnace.

Through direct condensation (whereby cooling liquid and pyrolysis gases are in direct contact) or indirect condensation (whereby cooling liquid and pyrolysis gases are separated) of volatile substances in pyrolysis gases after pyrolysis and before combustion in an incinerator, the high caloric sulfur is not discarded as a secondary waste stream but may be recovered as a valuable side product. This side product consists of elemental sulfur in case of indirect condensation or of valuable sulfides such as for example potassium sulfides (KₓS_{y}) in case of direct condensation using a potassium hydroxide solution as a direct coolant and washing liquid.

These and other objectives and advantages of this invention will become apparent from the present description, drawing and examples.

The invention thus relates to a method for the regeneration of spent carbonaceous adsorbent comprising a) feeding spent carbonaceous adsorbent to a drying and pyrolysis furnace, b) drying the spent carbonaceous adsorbent, c) regenerating the carbonaceous adsorbent by pyrolysis releasing pyrolysis gases and volatile substances and d) burning off the pyrolysis gases in an incinerator, said method characterized in that volatile substances are removed from the pyrolysis gases by condensation prior to combustion of the pyrolysis gases in an incinerator.

In a particular embodiment of the method according to the invention, volatile substances are removed from the pyrolysis gases by means of a condenser and the pyrolysis gases are recycled, in whole or in part, to the drying and pyrolysis furnace. In another particular embodiment of the method according to the invention, volatile substances are removed from the pyrolysis gases in a condenser with addition of a hydroxide solution, preferably a potassium hydroxide solution.

The device according to the invention thus comprises a drying and pyrolysis furnace, a condenser and an incinerator after the condenser. The configuration of a condenser after a drying and pyrolysis furnace and prior to an incinerator is at least from a thermal point of view not obvious because hot pyrolysis gases and volatile substances from the drying and pyrolysis furnace are cooled to a temperature of between 40°C and 180°C, preferably at a temperature between 120°C and 165°C in the condenser and then reheated and burned with an excess of oxygen in the incinerator.

The method according to the invention is suitable in particular for the regeneration of carbonaceous adsorbents heavily contaminated with sulfur compounds from the purification of for example sulfurous sewage gases such as biogas, landfill gas and synthetic gas (so-called syn-gas) and combustion gases of for example coal power plants and petroleum industry. A contamination with sulfur compounds of 10 to 60 weight percent of the spent carbonaceous adsorbents hereby forms no problem in the incinerator. The temperature in the incinerator is perfectly manageable, the durability of the incinerator is substantially increased (and when recycling the combustion gases, the durability of the drying and pyrolysis oven as well), work interruptions due to high temperatures in the incinerator are avoided and the capacity of the drying and pyrolysis furnace is substantially increased.

Under carbonaceous adsorbents are understood many substances that can serve through the pore structure of the carbon molecules to adsorb compounds from gases and liquids. The most important group of carbonaceous adsorbents are activated carbon (active carbon) in a large variety of physical appearances such as powders, pellets, granules, fibers, and the like, whether or not pre-treated with acid or for example by means of extraction. The present invention relates in particular to carbon specifically activated to adsorb high concentrations of sulfur compounds and to remove elemental sulfur and sulfur compounds such as SO_{x,}H₂S and other environmentally harmful ingredients from sulfur containing gases such as biogas, landfill gas and synthetic gas (so-called syn-gas) and combustion gases from e.g. coal and lignite power plants or the petroleum industry.

The drying and pyrolysis furnace for the regeneration of the spent carbonaceous adsorbents according to this invention can be a fluidized bed, a rotary kiln, a multiple stage furnace, or a shaft furnace such as those frequently described in the state of the art. Most furnaces include a drying and a regeneration zone in which the spent carbonaceous adsorbent is firstly dried and then regenerated by means of pyrolysis with release of pyrolysis gases and volatile substances.

Spent carbonaceous adsorbent is fed at a constant flow rate to the drying and pyrolysis furnace and dried at a temperature of from 40°C to 300°C (preferably at a temperature of from 90°C to 130°C) and propelled mechanically and by means of discharged steam (and optionally recycled pyrolysis gases from the condenser) through the furnace where the carbonaceous adsorbent is regenerated and pyrolysis gases and other volatile substances are released under pyrolysis conditions, at temperatures of from 300°C to 900°C (preferably at temperatures of 350°C to 700°C) and preferably with addition of steam causing carbon residues to decompose into CO and H₂.

Condensers are a type of equipment commonly used to at least partially convert hot gases by means of direct or indirect cooling into a liquid phase (or condensate) and to remove volatile contaminants from industrial waste gases. A type of condenser that is particularly suitable in the method and apparatus according to the present invention is the so-called direct condenser or scrubber. Scrubbers are a type of condensers in which waste gases are cooled and partially condensed by direct contact with a washing liquid and in which the condensate is washed out from the waste gases together with other contaminants and solids such as fly ash. Such condensers are also commonly used to reduce the emission of acid gases by addition of a neutralizing cooling and washing liquid.

The purification of hot acid gases from industrial plants, however, generally takes place in two steps: a first step for the removal of dust and fly ash and a second step for the removal of SO₂ and other acidic components. Various attempts have been made to remove both types of polluting substances in one step but this usually gave serious maintenance problems and limited efficiency. The waste gases usually pass through an electrostatic filter, a cyclone or a wet scrubber with water as cooling and washing liquid first and then, in a second step, through an SO₂-absorber, i.e. a scrubber with a neutralizing alkaline washing liquid.

The disadvantage of this device is that the waste gases after the SO₂-absorber are saturated with water and still contain acid components as SO₂. These gases are very corrosive to fans, pipes and elements of the installation. It may partly be resolved by re-heating the gases above its dew point or by choosing construction materials which resist these corrosive conditions but both solutions are, however, very expensive.

This is not the case by the method and the device according to the invention. As a matter of fact, the hot pyrolysis gases and other gaseous substances and steam from the drying and pyrolysis furnace are substantially oxygen-free and reducing. This means that the carbonaceous adsorbents with heavy sulfur contamination derived for example from sewage sulfur-containing gases such as biogas and landfill gas is mainly elemental sulfur, a limited amount of SOₓ (in particular SO and SO₂) with little or no traces of sulfur trioxide (SO₃) that is responsible for the formation of sulfuric acid (H₂SO₄) in water vapor. Due to the efficient removal of the sulfur compounds by means of a condenser from the hot, substantially oxygen-free reducing pyrolysis gases in the method and apparatus according to the invention, the formation of oxidized sulfur compounds and corrosive acids is avoided.

As already described above, the hot pyrolysis gases and other gaseous substances are cooled in the condenser to a temperature of about 40°C to 180°C, preferably 120°C to 165°C, with or without the addition of a washing liquid. A hydroxide solution is preferably used as a washing liquid, and in particular a potassium hydroxide solution as potassium hydroxide converts elemental sulfur and SOₓ to potassium sulfides that can readily be washed out from the pyrolysis gases.

By direct or indirect cooling of hot pyrolysis gases to a temperature of about 40°C to 180°C, preferably 120°C to 165°C, the elemental sulfur and sulfur compounds are discarded from the pyrolysis gases together with the washing liquid.

Pyrolyses gases stripped by condensation of volatile substances are then completely or partially recycled to the drying and pyrolysis furnace or burned in an incinerator. The gases are re-heated together with the required amount of oxygen to a high temperature, i.e. a temperature between 750°C and 1200°C, and kept sufficiently long at this high temperature to ensure that the residual contaminants (volatile organic substances, odor, ...) are oxidized to CO₂, H₂O, NOₓ, SOₓ, HCl, ....

The efficiency of the combustion is influenced by temperature, residence time, turbulence and availability of oxygen. For typical volatile organic substances, a combustion temperature of between 750 and 1000°C is sufficient but for substances harmful to the environment and particularly for halogenated substances a combustion temperature of between 1000 and 1200°C is recommended for a complete oxidation and decomposition of these substances. The size of the incinerator is very important. A large chamber operating at a lower temperature involves a larger investment but lower operational costs (i.e. for fuel); a smaller combustion chamber at a higher temperature will have the same performance against a lower investment but higher operational costs.

The choice of the incinerator for the method and the apparatus according to the present invention is less relevant from a thermal point of view as the pyrolysis gases, stripped of volatile substances by condensation, and the residual volatile impurities have sufficient caloric content for the pyrolysis gases at the exit temperature of the condenser, (i.e. 40° to 180°C, or preferably 120°C to 165°C) to be re-heated by incineration to the required combustion temperature.

As a matter of fact, heat is released by oxidation of the pyrolysis gases and residual organic substances in the pyrolysis gases. The concentration of residual organic substances in the pyrolysis gases and the heat released by combustion of the pyrolysis gases and its residual organic substances are usually sufficient to increase temperature in the incinerator and to maintain process temperature to the extent that the incineration may proceed auto-thermally.

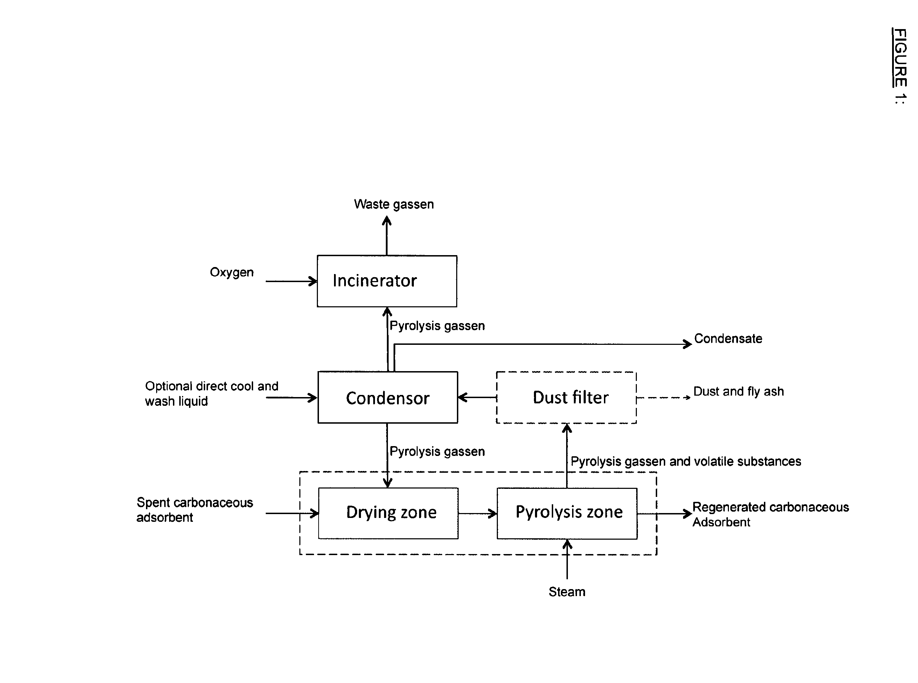

The device according to the invention is shown schematically in Figure 1. Spent carbonaceous adsorbent is fed under a constant flow rate to the drying zone of the drying and pyrolysis furnace. The drying and pyrolysis furnace is generally a single device but the spent carbonaceous adsorbent may also be dried advantageously in a separate drying furnace. This particular embodiment of the method according to the invention enables an even more stable regeneration process, condensation of volatile substances and incineration of pyrolysis gases stripped of volatile substances by condensation.

The dried spent carbonaceous adsorbent is propelled, by means of steam and possibly recycled purified pyrolysis gases or purely mechanically, to the pyrolysis zone of the drying and pyrolysis furnace driven and regenerated with addition of steam. During the regeneration of spent carbonaceous adsorbent, pyrolysis gases and other volatile substances are released as well as, of course, the regenerated carbonaceous adsorbent.

The pyrolysis gases and other volatile substances are stripped of dust in a cyclone or in another type of dust collector before cooling in the condenser either indirectly or directly by means of a washing liquid. Removing dust from the pyrolysis gases avoids abrasion, mechanical defects and blockages in the condenser and contamination of potentially valuable residual side products from the condenser. The pyrolysis gases are then cooled in a condenser by condensation and volatile substances are removed from the pyrolysis gases as described above, whether or not with addition of a washing liquid such as a hydroxide, preferably a potassium hydroxide solution. The pyrolysis gases stripped of volatile substances by condensation are then fed to the incinerator for oxidation of the pyrolysis gases and remaining volatile substances before the waste gases are evacuated in the atmosphere. In an alternative embodiment of this invention, a portion of the pyrolysis gases substantially stripped of volatile substances by condensation is recycled to the drying and pyrolysis furnace.

The method according to the invention is illustrated in the example herein below. To demonstrate the applicability and the advantages of the method and the apparatus according to the invention, a granular spent activated carbon from a biogas purification plant is regenerated according to the invention in an indirectly heated rotary drying and pyrolysis furnace with a capacity of 500kg/h.

The spent activated charcoal had a contamination of about 52gr. / 100gr. spent carbonaceous adsorbent and the contamination had the following composition:

| Component | wt.% |
|---|---|
| Hydrocarbons (not sulfur) | 10 |
| S (elemental sulfur) | 74 |
| Mercaptans | 6 |
| H₂O | 8 |
| other | 2 |

The spent activated carbonaceous adsorbent was fed at a constant flow rate of 500 kg/h to the drying and pyrolysis furnace. In this rotation drying and pyrolysis furnace, there is no clearly distinct drying zone and pyrolysis zone but the spent activated carbon is gradually heated from room temperature to about 110°C under the influence of recycled, washed pyrolysis gases, free of steam and other volatile substances. After an average residence time of about 30 minutes in this drying zone, the dried waste carbon is mechanically propelled to the pyrolysis zone of the furnace where it was allowed to gradually heated to a temperature of about 600°C. Pyrolysis gases and other volatile impurities were released and carbon residues were removed under the influence of 120kg of steam per hour. After an average stay of 30 minutes in the pyrolysis zone, the regenerated carbon was recovered from the furnace and then cooled.

The regeneration of the spent activated carbon resulted in a constant flow rate of about 400 Nm³/hour of pyrolysis gases and other volatile substances at a temperature of about 350°C. These pyrolysis gases were first stripped of dust and fly ash in a cyclone, fed to a condenser and cooled to a temperature of about 120°C to 125°C with the addition of a strong solution of potassium hydroxide. The condenser gave a residue stream containing approximately 17% of sulfur at a nearly constant yield of 1120 kg/h.

The pyrolysis gases largely stripped of volatile substances were then re-heated and oxidized at a temperature of about 800°C to 900°C in the incinerator. The temperature of the incinerator was almost constant and required no additional fuel nor cooling.

The condensed pyrolysis gases contained no more than 0.05% by volume of S and could be combusted without formation of a significant amount of SOₓ that could be neutralized with the aid of a conventional waste gas system.

## Claims

1. A method for the regeneration of spent carbonaceous adsorbent comprising
a) feeding spent carbonaceous adsorbent to a drying and pyrolysis furnace,
b) drying the spent carbonaceous adsorbent, c) regenerating the carbonaceous adsorbent by pyrolysis releasing pyrolysis gases and volatile substances and d) burning off the pyrolysis gases in an incinerator, said method **characterized in that** volatile substances are removed from pyrolysis gases by condensation prior to combustion of the pyrolysis gases in an incinerator.

2. A method according to claim 1, **characterized in that** the spent carbonaceous adsorbent is a spent activated carbon, preferably a spent activated carbon heavily contaminated with sulfur compounds.

3. A method according to any of the preceding claims, **characterized in that** the spent carbonaceous adsorbent is a spent activated carbon with a sulfur contamination of 10 to 60 wt.% of elemental sulfur and/or sulfur compounds.

4. A method according to any of the preceding claims, **characterized in that** volatile substances are removed from the pyrolysis gases under low-oxygen conditions by direct or indirect condensation.

5. A method according to any of the preceding claims, **characterized in that** volatile substances are removed from pyrolysis gases by condensation with a hydroxide solution, preferably a potassium hydroxide solution.

6. A method according to any of the preceding claims, **characterized in that** volatile substances are removed from the pyrolysis gases by condensation at a temperature of 40°C to 180°C, preferably 120°C to 165°C.

7. A method according to any of the preceding claims, **characterized in that** pyrolysis gases stripped of volatile substances by condensation are recycled to the drying and pyrolysis furnace.

8. A method according to claim 7, **characterized in that** 10% to 90% and preferably 50% to 90% of the pyrolysis gases stripped of volatile substances by condensation are recycled to the drying and pyrolysis furnace.

9. A method according to any of the preceding claims, **characterized in that** the released pyrolysis gases and volatile substances are stripped of dust in a dust separator prior to condensation of volatile substances from the pyrolysis gases.

10. A method according to any of the preceding claims, **characterized in that** the pyrolysis gases stripped of volatile substances by condensation are burned in an incinerator with an excess of oxygen at a temperature of 750°C to 1200°C, preferably 750°C to 1000°C.

11. Apparatus for the regeneration of spent carbonaceous adsorbent according to any of the preceding claims, comprising a drying and pyrolysis furnace, an incinerator and a condenser after the drying and pyrolysis furnace and before the incinerator.

12. Apparatus according to claim 11, **characterized in that** the condenser after the drying and pyrolysis furnace and before the incinerator is a scrubber.
